# EUROPÄISCHE PATENTSCHRIFT

(11) **EP 1 750 412 B1**
(45) Veröffentlichungstag und Bekanntmachung des Hinweises auf die Patenterteilung: **04.11.2015**
(21) Anmeldenummer: 06011166.3
(22) Anmeldetag: 31.05.2006
(51) Int. Cl.: H04L 29/00, H04L 12/28

(54) **Signalisierung von Zustandsinformationen durch RFID-Technik**
Signalling of status information using RFID technology
Signalisation d'informations de statut en utilisant la technologie de RFID

(30) Priorität: 03.08.2005 DE 102005036401
(43) Veröffentlichungstag der Anmeldung: 07.02.2007
(73) Patentinhaber: Deutsche Telekom AG, 53113 Bonn (DE)
(72) Erfinder: Brackmann, Ludwig, Dipl.-Ing., 53225 Bonn (DE); Sbrzesny, Holger, Dipl.-Ing., 53359 Rheinbach (DE)
(74) Vertreter: 2K Patentanwälte Blasberg Kewitz & Reichel

(56) Entgegenhaltungen:
- EP-A1- 1 699 028
- WO-A2-2004/047000
- GB-A- 2 286 948
- LIN B-R ET AL: "Event-Driven Messaging Services Over Integrated Cellular and Wireless Sensor Networks: Prototyping Experiences of a Visitor System", IEEE JOURNAL ON SELECTED AREAS IN COMMUNICATIONS, IEEE SERVICE CENTER, PISCATAWAY, US, Bd. 23, Nr. 6, 1. Juni 2005 (2005-06-01), Seiten 1133-1145, XP011132970, ISSN: 0733-8716, DOI: 10.1109/JSAC.2005.845631
- YU W D ET AL: "Design and implementation of a personal mobile medical assistant", ENTERPRISE NETWORKING AND COMPUTING IN HEALTHCARE INDUSTRY, 2005. HEAL THCOM 2005. PROCEEDINGS OF 7TH INTERNATIONAL WORKSHOP ON BUSAN, SOUTH KOREA 23-25 JUNE 2005, PISCATAWAY, NJ, USA,IEEE, US, 23. Juni 2005 (2005-06-23), Seiten 172-178, XP010829630, DOI: 10.1109/HEALTH.2005.1500432 ISBN: 978-0-7803-8940-3

## Beschreibung

Die Erfindung betrifft eine Vorrichtung und ein Verfahren zum Übermitteln von Zustandsinformationen durch RFID-Technik.

### Gebiet der Erfindung:

Individuelle Klingeltöne für Telefone für unterschiedliche Nachrichtenarten (Sprachanruf, SMS-Eingang, ...) werden seit Jahren sehr erfolgreich angewendet. Andere elektrische /elektronische Geräte (z. B. Hausgeräte), die nicht über einen Anschluss zu einem Kommunikationsnetz (z. B. Internet, Handy-Netz, Telefonnetz) verfügen, werden mit einem während der Produktion festgelegten Signalisierungszeichen für Zuständsmeldungen ausgeliefert, das nicht veränderbar ist. Hierbei handelt es sich in der Regel um Lampen oder LCD-Anzeigen.
Der zunehmenden Individualisierung auch des Hausgeräte-Markts kann durch den bisherigen Ansatz nicht ausreichend Rechnung getragen werden. In der Regel müssen Hausgeräte keine Schnittstelle zum Empfang von Daten aufweisen, es reicht eine Schnittstelle zum Senden von Daten, um Statusmitteilungen zu geben, wie z.B. Temperatur unterschritten, Backofen seit 4 Stunden angeschaltet etc.

RFID-Tags werden heute für die Identifizierung von Gütern, wie z.B. Hausgeräten im Rahmen der Logistik eingesetzt. Hierbei wird jedoch immer ein passiver Einsatz vorgesehen. D.h. der RFID-Tag wird durch einen externen Sender aktiviert und angeregt und sendet dann die gewünschten Informationen. Das Gerät auf dem der RFID-Tag angebracht ist, hat lediglich eine passive Funktion.
Aus der WO 2004/047000 ist ein Verfahren bekannt, bei dem ein RFID-Tag variable Daten übermittelt. Die EP 1699 028 A1 offenbart ein Verfahren, bei dem ein kabeloses Alarmsystem mit entfernten Alarmempfängern arbeitet, die im Falle eines Alarms angesprochen werden.

### Aufgabe der Erfindung:

Ziel der Erfindung ist es, eine einfache Lösung für die drahtlose Übertragung von Zuständen bereitzustellen, die durch eine Vielzahl von Geräten genutzt werden kann.

### Übersicht über die Erfindung:

Gelöst wird die Aufgabe durch eine Erfindung mit den Merkmalen der unabhängigen Ansprüche.
Hierbei wird neben der Nutzung von RFID-Tags für die passive Identifikation der RFID-Tag als aktiver Sender genutzt. Das Hausgerät erzeugt auf einfache Weise den Triggerimpuls zum Aktivieren der Aussendung des RFID-Tag-Inhalts (Dieses entspricht dem Verhalten eines RFID-Tag-Lesegeräts zu Beginn des durch ihn gesteuerten Auslesevorgangs). Dieses geschieht durch Aussenden eines einfachen Funk-Impulses nach RFID-Spezifikation. Es sind auch komplexere Funk-Impulse denkbar. Daraufhin sendet der RFID-Tag seine Daten. Dieser Vorgang dauert einige zehn bis einige hundert Millisekunden.
Wenn nun ein Ereignis auftritt, das signalisiert werden soll, bringt das Hausgerät "seinen" RFID-Tag zum Senden. In einer möglichen Ausführungsform ist die Aktivierungssendeantenne mechanisch so nahe am RFID-Tag platziert, dass die Aktivierungsenergie so niedrig sein kann, dass nicht die RFID-Tags benachbarter Geräte ausgelöst werden.

Soll ein Hausgerät mehrere unterschiedliche Signalisierungen senden können (Programm fertig, Alarm, Verbrauchsstoffe nachfüllen, ...), wird der RFID-Tag in kurzer Folge mehrere Male in einem vordefinierten Muster (Beispiele: Anzahl der Aktivierungen pro Zeiteinheit oder Morse Code) aktiviert. Auch können unterschiedliche Frequenzen, Amplituden oder übertragene Informationen verwendet werden, um unterschiedliche Zustände durch den RFID-Tag zu signalisieren.
Die so übermittelten Nachrichten werden empfangen und können dann weiter verarbeitet werden. Hierzu wird in der Regel ein Empfänger benötigt, der mit einem zentralen Server verbunden ist. Dieser Server kann dann optische, akustische, haptische oder Geruchsmeldungen erzeugen.
Die Konfiguration des Servers kann z.B. durch ein mobiles oder schnurloses Telekommunikationsendgerät (z. B. Handy, Laptop, Tablet-PC, PDA), das einerseits über eine Schnittstelle zu einem Telekommunikationsnetz (z. B. GSM, DECT, WLAN), und andererseits über eine Schnittstelle verfügt, über die eine eindeutige Gerätekennung (Hersteller - Typ-Beschreibung - Charge - Seriennummer) in das Gerät eingelesen oder durch Nutzerinteraktion eingegeben werden kann.
Die Kommunikation des Telekommunikationsendgerätes und des Haushaltsgerätes erfolgt über eine Funkschnittstelle (z. B. Infrarot, Bluetooth, Zigbee, Einlesen von RFID-Tag-Informatio'nen), Bar-Code-Einlesen per Scanner oder Eingabe per Nutzerinteraktion. Durch die räumliche Nähe und ggf. durch Nutzerinteraktion ist gewährleistet, dass das gewünschte Hausgerät ausgewählt wird. Somit hat z.B. das Handy die eindeutige ID des Gerätes eingelesen, und kann diese weiterverarbeiten.
In das Handy wird somit vom Hausgerät eine eindeutige Gerätekennung übertragen.
Diese Gerätekennung wird nun zusammen mit einer Nutzerkennung (z. B. SIM-Karten-Inhalt des Handys, persönliche Nutzerkennung eines Kommunikationsdiensteanbieters, oder Anschlusskennung des schnurlosen Telefons am Festnetzanschluss) über das Telekommunikationsnetz an einen Server übertragen.
Hier kann sich der Nutzer über die Eingabe der obigen Nutzerkennung anmelden und danach dem Hausgerät ggf. aus einer Auswahl einen (neuen) Signalisierungston und / oder eine optische Signalisierung zuordnen. Weitere Signalisierungszeichen wie Vibration oder Duft sind ebenfalls denkbar. Dieser Vorgang kann für unterschiedliche Hausgeräte-Zustände wiederholt werden. Der Server ist mit dem Empfänger der RFID-Signale verbunden und wertet diese aus, um dann ein Signalisierungszeichen zu erzeugen in Abhängigkeit der Information und der Identität des Gerätes.
Alternativ ist auch die Nutzung eines mobilen Computers (z. B. Laptop, Tablet-PC) oder persönlichen Organizers (z. B. PDA, Palm) möglich. Auch hier ist die räumliche Nähe zwischen Haushaltgerät und Eingabegerät - in diesem Falle eben Computer o. ä. - einfach herzustellen. Die Kommunikation zwischen den Geräten kann wie oben beschrieben geschehen. Ausserdem ist auch die Nutzung eines Web-Interfaces möglich, in das der Nutzer die entsprechenden Daten eingibt.
Zur Wiedergabe der einzelnen akustischen, optischen und / oder sonstigen Signale wird folgendermassen vorgegangen:
Eine (pro Raum oder pro Haushalt) zentrale Einheit bzw. Empfänger empfängt die "RFID-Morse-Codes". Diese Einheit ist zumindest zeitweise mit einem Kommunikationsnetz verbunden. Über das Kommunikationsnetz werden die oben ausgewählten Signalisierungen (oder Ereignisse, es kann sich auch um das Schalten einer Lampe handeln) zusammen mit der Zuordnung in die häusliche Zentraleinheit bzw. Server geladen.
Die Zentraleinheit verfügt über akustische, optische oder andere Signalisierungsmöglichkeiten bzw. einen entsprechenden Zugriff darauf. Dieses kann auch beinhalten, dass (gesprochene) Texte quasi als Klingelzeichen abgespeichert werden können und dann aktiviert werden können.
Ergänzend kann die zentrale Einheit auch per Kommunikationsnetz Signalisierungen aus der Wohnung hinaus übertragen, die dann an anderer Stelle weiterverarbeitet und ausgewertet werden. So ist es denkbar, dass eine SMS mit Warnmeldungen erzeugt wird, falls die Kühltruhe nicht ausreichend für Kühlung sorgt.

Sollte das Haushaltsgerät selbst über die Möglichkeit verfügen, veränderbare Signalisierungen auszugeben, können diese auch zusätzlich oder alternativ zur Zentraleinheit vom Telekommunikationsendgerät oder Computer in das Haushaltsgerät übertragen und dort bei Eintritt des entsprechenden Ereignisses ausgegeben werden.

### Kurze Beschreibung der Zeichnungen:

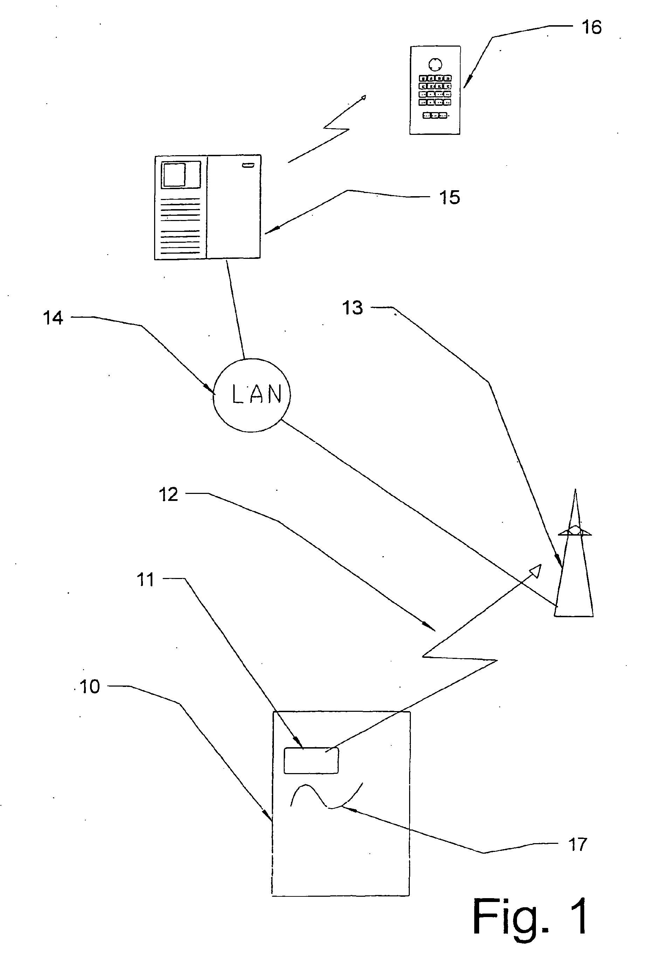

Die einzige Figur zeigt einen Kühlschrank mit einem RFID-Tag, der diesen aktiviert, um dann die Meldung an einen zentralen Server zu übermitteln.

### Detaillierte Beschreibung der Figur:

Die einzige Figur zeigt einen Kühlschrank 10, der auch ein anderes Gerät sein kann. Die Erfindung stellt keinerlei Beschränkung auf Haushaltsgeräte dar, sondern es können jegliche Geräte des täglichen Gebrauchs sein, die ein RFID-Tag selbstständig aktivieren können, indem sie z. B. einen elektrischen Impuls senden oder ein entsprechend abgeschirmtes Funksignal 17 übermitteln, dass nur den Tag auf dem Gerät selber aktiviert. Der RFID-Tag 11 sendet dann per Funk an einen Empfänger 13, wenn er durch den Kühlschrank 10 aktiviert wurde, eine Meldung. Die Meldung wird über ein Netzwerk 14 an einen Server 15 weitergeleitet. Der Server nimmt die Zuordnung von Signalen zu Ereignissen vor. Diese individuelle Zuordnung kann durch ein Handy 16 bestimmt werden. Im vorliegenden Fall wird das Ereignis jedoch auch als SMS an das Handy 16 weitergeleitet. Andere Ausführungsformen wurden bereits oben beschrieben.

Die vorliegende Beschreibung stellt keinerlei Beschränkung auf die beschriebene Ausführungsform dar. Vielmehr wird der Schutzumfang durch die folgenden Ansprüche bestimmt, die so weit auszulegen sind wie möglich.

## Patentansprüche

1. Verfahren zur Sendung von Zustandsinformationen durch ein Gerät (10) unter Verwendung von RFID-Tags (11), umfassend folgende Schritte:
- eintreten eines Zustandes beim Gerät,
- abhängig vom Zustand, Aktivieren des RFID-Tags auf dem Gerät zur Aussendung von Zustandsinformationen, **dadurch gekennzeichnet, dass** das Aktivieren durch die Erzeugung eines Triggerimpuls erfolgt, wobei das Gerät den Triggerimpuls erzeugt und der Triggerimpls einen Funk-Impuls nach RFID-Sepezifikation ist.

2. Verfahren nach dem vorhergehenden Anspruch, wobei auf dem Gerät eine Vielzahl von RFID-Tags angeordnet sind, und das Gerät in Abhängigkeit des Zustandes einen oder mehrere RFID-Tags aktiviert.

3. Verfahren nach einem oder mehreren der vorhergehenden Ansprüche, wobei das Gerät mindestens eine Aktivierungsantenne aufweist, die so dimensioniert ist, dass nur eines der gewünschten RFID-Tags aktiviert wird ohne das ein Übersprechen erfolgt.

4. Verfahren nach einem oder mehreren der vorhergehenden Ansprüche, wobei die RFID-Tags so ausgebildet sind, dass sie in Abhängigkeit der Art der Aktivierung eine unterschiedliche Zustandsinformation senden.

5. Verfahren nach dem vorhergehenden Anspruch, **dadurch gekennzeichnet, dass** die Art der Aktivierung durch eine oder mehrere der folgenden Weisen erfolgen kann: Stärke des Signals, Inhalt der übertragenen Informationen im Signal, Amplitude des Signals, Frequenz des Signals.

6. Verfahren nach einem oder mehreren der vorhergehenden Ansprüche, wobei durch einen Empfänger die Signale vom aktivierten RFID-Tag entgegen genommen werden, um dann in Abhängigkeit des Signals eine optische, akustische, haptische oder Geruchs-Meldung zu erzeugen.

7. Verfahren nach dem vorhergehenden Anspruch, wobei der Empfänger so ausgebildet ist, dass die Meldungen in Abhängigkeit des sendenden Gerätes oder der Art der Zustandsinformation individuell änderbar und auswählbar sind.

8. Verfahren nach dem vorhergehenden Anspruch, wobei der Empfänger einen Web-Server aufweist und mit einem Netzwerk verbunden ist, so dass die Zuordnung der Meldungen über ein Web-Interface oder das Netzwerk erfolgt.

9. Verfahren nach dem vorhergehenden Anspruch, wobei das Netzwerk ein Telefonnetzwerk ist, und die Zuordnung über SMS oder analoge oder digitale Signale erfolgt.

10. Verfahren nach einem oder mehreren der vorhergehenden Ansprüche, **gekennzeichnet durch** eine Verwendung einer Vorrichtung nach einem oder mehreren der folgenden Vorrichtungeansprüche 11-16.

11. Vorrichtung (10), die Zustandsinformationen bereitstellt, mit mindestens einem RFID-Tag (11), wobei das Gerät den RFID-Tag selbständig aktiviert, falls sich ein definierter Zustand ändert, um eine Zustandsinformation zu senden, **dadurch gekennzeichnet, dass** das Aktivieren durch die Erzeugung eines Triggerimpuls erfolgt, wobei das Gerät den Triggerimpuls erzeugt und der Triggerimpuls einen Funk-Impuls nach RFID-Spezifikation ist.

12. Vorrichtung nach dem vorhergehenden Anspruch, wobei die Aktivierung durch eine lokale Antenne erfolgt.

13. Vorrichtung nach dem vorhergehenden Anspruch, wobei die lokale Antenne so ausgelegt ist, dass nur der gewünschte RFID-Tag aktiviert wird, und keine anderen.

14. Vorrichtung nach einem oder mehreren der vorhergehenden Vorrichtungsansprüche, wobei eine Vielzahl von RFID-Tags vorhanden sind, die unterschiedliche Zustandsinformationen senden.

15. Vorrichtung nach einem oder mehreren der vorhergehenden Vorrichtungsansprüche, wobei der RFID-Tag so ausgebildet ist, dass es eine Mehrzahl von Zustandsinformationen senden kann, in Abhängigkeit der Form der Aktivierung.

16. Vorrichtung nach dem vorhergehenden Vorrichtungsanspruch, wobei die Form der Aktivierung durch eine Frequenz, Amplitude den Inhalt der Aktivierungsmeldung bestimmt.

## Claims

1. A method for sending status information via an apparatus (10) using RFID tags (11), comprising the steps of:
- Entering a state of the apparatus,
- Depending on the status, activation of the RFID tag on the apparatus for the transmission of status information, **characterized in that** the activation is effected by the generation of a trigger pulse, said apparatus generates the trigger pulse and the trigger pulse is a radio pulse according to the RFID specification.

2. Method according to the preceding claim, wherein a plurality of RFID tags is disposed on the apparatus and the apparatus activates one or more RFID tags depending on the state.

3. Method according to one or more of the preceding claims, wherein said apparatus comprises at least one activation antenna, which is dimensioned in such a way that only one of the requested RFID tag is activated without occurring a cross-talk.

4. Method according to one or more of the preceding claims, wherein said RFID tags are configured so that they transmit depending on the type of activation a different state information.

5. Method according to the preceding claim, **characterized in that** the type of activation can be carried out by one or more of the following: manner: strength of the signal, content of the transmitted information in the signal, amplitude of the signal, frequency of the signal.

6. Method according to one or more of the preceding claims, wherein the signals from the activated RFID tag are accepted by a receiver, in order to then produce a visual, audible, tactile or olfactory message in dependence of the signal.

7. Method according to the preceding claim, wherein the receiver is formed such that the messages are individually modifiable and selectable in dependence of the sending apparatus or the type of status information

8. Method according to the preceding claim, wherein the receiver comprises a web server and is connected to a network, so that the allocation of the messages takes place via a web interface or the network.

9. Method according to the preceding claim, wherein the network is a telephone network, and the allocation is carried out via SMS or analog or digital signals.

10. Method according to one or more of the preceding claims, **characterized by** a use of a device according to one or more of the following apparatus claims 11-16.

11. An Apparatus (10), providing the status information, with at least one RFID tag (11), wherein said apparatus activates the RFID tag independently if a defined status changes to send status information, **characterized in that** the activating is done by the generation of a trigger pulse, wherein the apparatus generates the trigger pulse and the trigger pulse is a radio pulse according to the RFID specification.

12. An Apparatus according to the preceding claim, wherein the activation is carried out by a local antenna.

13. An Apparatus according to the preceding claim, wherein the local antenna is configured that only the requested RFID tag is activated, and no others.

14. An Apparatus according to one or more of the preceding device claims, wherein a plurality of RFID tags are present, which send different status information.

15. An Apparatus according to one or more of the preceding device claims, wherein the RFID tag is configured that it can transmit a plurality of status information depending on the state of activation.

16. An Apparatus according to the preceding device claim, wherein the type of activation is determined by a frequency, amplitude or the content of the activation message is defined.

## Revendications

1. Procédé pour transmettre une information d'état via un dispositif (10) en utilisant des étiquettes RFID (11), comprenant les étapes :
- saisie d'un état du dispositif ,
- en fonction de l'état, activation de l'étiquette RFID sur le dispositif pour la transmission de l'information d'état, **caractérisé en ce que** l'activation est effectuée par la génération d'un pulse de déclenchement, ledit dispositif générant le pulse de déclenchement et le pulse de déclenchement étant un pulse radio selon la spécification RFID.

2. Le procédé selon la revendication précédente, dans lequel une pluralité d'étiquettes RFID sont disposées sur le dispositif et le dispositif active une ou plusieurs étiquettes RFID en fonction de l'état.

3. Le procédé selon une ou plusieurs des revendications précédentes, dans lequel ledit dispositif comporte au moins une antenne d'activation, qui est dimensionnée de façon à ce qu'une seule étiquette seulement des étiquettes RFID sollicitées n'est activée sans risque de diaphonie.

4. Le procédé selon une ou plusieurs des revendications précédentes, dans lequel lesdites étiquettes RFID sont configurées de telle sorte qu'elles transmettent une information d'état différente en fonction du type d'activation.

5. Le procédé selon la revendication précédente, **caractérisé en ce que** le type d'activation peut être effectué suivant une ou plusieurs manières suivantes : la force du signal, le contenu de l'information transmise au sein du signal, l'amplitude du signal, la fréquence du signal.

6. Le procédé selon une ou plusieurs des revendications précédentes, dans lequel les signaux provenant de l'étiquette RFID active ont été acceptées par un récepteur, dans le but de produire subséquemment un message visuel, audible tactile ou olfactif en fonction du signal.

7. Le procédé selon la revendication précédente, dans lequel le récepteur est formé de telle sorte que les messages sont individuellement modifiables et sélectionnables en fonction du dispositif de transmission ou du type d'information d'état.

8. Le procédé selon la revendication précédente, dans lequel le récepteur comprend un serveur web et est connecté à un réseau, de sorte que l'allocation des messages se produit sur une interface web ou sur le réseau.

9. Le procédé selon la revendication précédente, dans lequel le réseau est un réseau téléphonique, et l'allocation est réalisée via SMS ou par des signaux analogiques ou numériques.

10. Le procédé selon une ou plusieurs des revendications précédentes, **caractérisé par** l'utilisation d'un dispositif selon une ou plusieurs des revendications de dispositif suivantes 11-16.

11. Un dispositif (10), fournissant une information d'état, avec au moins une étiquette RFID (11), dans lequel ledit dispositif active l'étiquette RFID indépendamment si un état défini change pour transmettre une information d'état,
**caractérisé en ce que** l'activation est réalisée par la génération d'un pulse de déclenchement, dans lequel le dispositif génère le pulse de déclenchement et le pulse de déclenchement est un pulse radio selon la spécification RFID.

12. Un dispositif selon la revendication précédente, dans lequel l'activation est réalisée par une antenne locale.

13. Un dispositif selon la revendication précédente, dans lequel l'antenne locale est configurée pour que seulement l'étiquette RFID est activée, à l'exclusion des autres.

14. Un dispositif selon une ou plusieurs des revendications de dispositif précédentes, dans lequel une pluralité d'étiquettes RFID est présente, qui transmettent des informations d'état distinctes.

15. Un dispositif selon une ou plusieurs des revendications de dispositif précédentes, dans lequel l'étiquette RFID est configurée de sorte qu'elle puisse transmettre une pluralité d'information d'état en fonction de l'état de l'activation.

16. Un dispositif selon la revendication de dispositif précédente, dans lequel le type d'activation est déterminé par une fréquence, une amplitude ou le contenu du message d'activation défini.
